# EUROPÄISCHE PATENTSCHRIFT

(11) **EP 2 879 854 B1**
(45) Veröffentlichungstag und Bekanntmachung des Hinweises auf die Patenterteilung: **21.03.2018**
(21) Anmeldenummer: 13739208.0
(22) Anmeldetag: 18.07.2013
(51) Int. Cl.: B29C 45/04, B29C 45/17, B29C 45/16, B29C 45/06

(54) **SCHLIESSEINHEIT FÜR EINE SPRITZGIESSMASCHINE**
CLOSING UNIT FOR AN INJECTION MOLDING MACHINE
UNITÉ DE FERMETURE POUR UNE MACHINE DE MOULAGE PAR INJECTION

(30) Priorität: 06.08.2012 DE 102012107171
(43) Veröffentlichungstag der Anmeldung: 10.06.2015
(73) Patentinhaber: KraussMaffei Technologies GmbH, 80997 München (DE)
(72) Erfinder: GÜNZEL, Timo, 85221 Dachau (DE)
(74) Vertreter: Wilhelm, Ludwig
(86) Internationale Anmeldenummer: PCT/EP2013/065157
(87) Internationale Veröffentlichungsnummer: WO 2014/023545

(56) Entgegenhaltungen:
- EP-A1- 2 565 010
- JP-A- 2004 050 780
- N.N.: "Multicolour and multicomponent machines Multinject versatile, modular system solutions", Krauss-Maffei Kunststofftechnik GmbH , Juli 2006 (2006-07), Seiten 1-12, XP002713508, Gefunden im Internet: URL:http://www.neofyton.com/cms_files/plas tic/pdf/multinject_prospekt-gb-060717.pdf [gefunden am 2013-09-24]
- HARALD WOLLSTADT: "Werkzeug statt Spezialmaschine", PLASTVERARBEITER, Juni 2012 (2012-06), Seiten 44-45, XP002713509,
- Christy Domanowski: "Milacron to Showcase Varian Turntable at NPE2012", Milacron LLC , 1. April 2012 (2012-04-01), Seiten 1-2, XP002713510, Gefunden im Internet: URL:http://www.milacron.com/npe-media/medi a/injection/Milacron-Turntable.pdf [gefunden am 2013-09-24]
- Harry Pruner, Wolfgang Nesch: "Spritzgiesswerkzeuge Kompakt", 3. Mai 2012 (2012-05-03), Technisches Institut für Aus- und Weiterbildung Dr.-Ing. Paul Christiani GmbH & Co. KG, Carl Hanser Verlag GmbH & Co. KG, XP002713511, ISBN: 3446427503 Seite 88
- N.N.: "Die Vitesse Baureihe", Ferromatik Milacron Europa , April 2009 (2009-04), Seiten 1-16, XP002713512, Gefunden im Internet: URL:http://www.ferromatik.org/wtryskarki/v itesse-nie.pdf [gefunden am 2013-09-24]

## Beschreibung

Die Erfindung betrifft eine Schließeinheit für eine Spritzgießmaschine nach dem Oberbegriff des Anspruchs 1.

Aus der nachveröffentlichten europäischen Patentanmeldung EP 2 565 010 A1 ist eine Formanordnung bekannt, welche aus mindestens drei Teilen eine öffnungsfähige und verschließbare Formkavität bildet.

Aus der WO 2007/055607 A2 und dem Artikel "Werkzeug statt Spezialmaschine" von HARALD WOLLSTADT in der Zeitschrift "PLASTVERARBEITER", Juni 2012 (2012-06), Seiten 44-45 ist es bekannt, an einer feststehenden Werkzeugaufspannplatte einer Schließeinheit einen C-Rahmen als Drehvorrichtung für Etagen-Werkzeuge anzuordnen. Der C-Rahmen wird von zwei parallelen horizontalen Platten und einer längeren vertikalen Platte gebildet. Mit der längeren vertikalen Platte wird der C-Rahmen an der feststehenden Werkzeugaufspannplatte befestigt. An jeder horizontalen Platte ist je ein Antrieb und ein Drehteller angeordnet und zwar dergestalt, dass die beiden Drehteller sich gegenüberliegen und dazwischen das um eine vertikale Achse zu drehende Etagen-Werkzeug eingespannt und mit den beiden Drehtellern drehfest verbunden werden kann.

Aus der DE 10 2004 050 311 B4 ist eine gattungsgemäße Schließeinheit für eine Spritzgießmaschine bekannt. In dieser Schrift wird vorgeschlagen, bei einer Spritzgießmaschine mit Wendeplatten die Wendeplatte durch eine Auswerfereinheit zu ersetzen. Alternativ wird vorgeschlagen, eines der Formwerkzeuge eines Etagenwerkzeuges durch ein Dummywerkzeug ohne Funktion zu ersetzen. Diese Maßnahmen erhöhen die Flexibilität einer Spritzgießmaschine, die von ihrer ursprünglichen Bauart her als Spritzgießmaschine mit Etagenwerkzeug/Wendeplatten aufgebaut ist, wesentlich, so dass es auch möglich ist, mit einer derartigen Spritzgießmaschine beispielsweise doppelte Einfachwerkzeuge zu bedienen ohne ein vorhandenes zweites Einspritzaggregat entfernen zu müssen. Des Weiteren kann die vorgeschlagene Lösung gegebenenfalls zur Fertigung besonders einfacher Teile behilflich sein, indem eine Spritzgießmaschine mit Etagenwerkzeug auf eine einfach wirkende Spritzgießmaschine nach einer Standardbauart gerüstet wird.

Eine solche Schließeinheit hat sich bewährt. Es besteht jedoch weiterhin das große Bedürfnis der Endabnehmer von Spritzgussmaschinen, den installierten Maschinenpark hochflexibel zu halten bzw. hochflexibel weiter auszubauen, um die entsprechenden Auslastungen der Spritzgießmaschinen bei Stückzahlschwankungen und/oder Artikeländerungen optimal gestalten zu können.

Des Weiteren besteht das Bedürfnis, eine einfach aufgebaute Standard-Zweiplatten-Spritzgießmaschine mit einer beweglichen und einer festen Werkzeugaufspannplatte in einfacher Art und Weise zu einer Spritzgießmaschine auf- oder umzurüsten, die eine Teilefertigung in Zwei- oder Mehrkomponententechnik ermöglicht.

Diese Aufgaben werden mit einer Schließeinheit mit den Merkmalen des Anspruchs 1 gelöst. Vorteilhafte Ausführungsformen sind in den abhängigen Unteransprüchen angegeben.

Eine erfindungsgemäße Schließeinheit für eine Spritzgießmaschine umfasst zumindest zwei Werkzeugaufspannplatten, von denen zumindest eine Werkzeugaufspannplatte beweglich ist. Weiterhin umfasst die Schließeinheit zumindest ein Formwerkzeug, bei dem aus einem ersten Formwerkzeugteil und aus einem zweiten Formwerkzeugteil die Bildung einer öffnungsfähigen und verschließbaren Formkavität ermöglicht ist, wobei die Schließeinheit eine Dummyeinheit besitzt, welche in der Schließrichtung der Schließeinheit betrachtet zwischen den Werkzeugaufspannplatten angeordnet ist. Die erfindungsgemäße Schließeinheit zeichnet sich dadurch aus, dass das erste Formwerkzeugteil mittels einer Dreheinheit/eines Drehtellers relativ zur Dummyeinheit und/oder zweiten Formwerkzeugteil verdrehbar an der Dummyeinheit befestigt ist. Die Drehachse ist hierbei parallel zu einer Öffnungs- und Schließrichtung des Formwerkzeugs angeordnet.

Hierdurch gelingt es in einfacher Art und Weise bei einer Spritzgießmaschine, die zum Einsatz eines Etagen- und/oder Wendeplattenwerkzeugs eingerichtet ist, diese auf eine einfach wirkende Spritzgießmaschine umzurüsten, die lediglich ein Werkzeug besitzt und dieses Werkzeug beispielsweise zur Herstellung Zwei- oder Mehrkomponentenbauteilen ausgelegt ist.

Hierdurch entsteht eine Erhöhung der Flexibilität von Spritzgießmaschinen, die beispielsweise bei einem Spritzgießer aufgebaut sind. Es kann ohne Weiteres vorkommen, dass beispielsweise eine für an sich andere (aufwändigere Werkzeuge, wie z. B. Etagenwerkzeuge oder Wendeplattenwerkzeuge) vorgesehenen Maschine gerade nicht benötigt werden und stattdessen eine Spritzgießmaschine benötigt wird, die ein einziges Formwerkzeug mit einer Formtrennebene besitzt. Hierfür eignet sich die erfindungsgemäße Schließeinheit, so dass derartige Spritzgießmaschinen variabel und effektiv eingesetzt werden können. Gemäß einer besonderen Ausführungsform besitzt die Dummyeinheit eine Auswerfereinrichtung, die mit dem Formwerkzeug zusammenwirkt und geeignet ist, fertig gestellte Bauteile aus dem Formwerkzeug auszuwerfen.

Bevorzugt ist die Auswerfereinheit im Inneren der Dummyeinheit angeordnet, so dass es zudem zweckmäßig ist, die Dummyeinheit mit einem Innenraum zur Aufnahme der Auswerfereinheit zu versehen. In einer weiteren vorteilhaften Ausführungsform der erfindungsgemäßen Schließeinheit besitzt die Dummyeinheit zudem Verteilereinrichtungen, mit denen zumindest ein Fluid, z. B. ein Kühl- oder Hydraulikfluid dem Formwerkzeug zugeleitet werden können. Gleichermaßen können selbstverständlich auch Fluidableitungen vorgesehen sein und über die Verteilereinrichtung geführt werden. Dies ergibt insbesondere dann einen Vorteil wenn das eingesetzte, z. B. als Mehrkomponentenwerkzeug ausgebildete Formwerkzeug konstruktiv bedingt von derjenigen Seite aus mit Fluid zu versorgen ist, die üblicherweise an der beweglichen Werkzeugaufspannplatte angeordnet ist.

Besonders bevorzugt ist es, dass die Dummyeinheit im Bereich der Dreheinheit/dem Drehteller auf einem Schiebetisch und/oder Drehtisch lagert, d. h. unterstützt ist. Dies ist insbesondere dann von Vorteil, wenn ein derartiger Schiebe-/Drehtisch bei einer Spritzgießmaschine für ein Etagen- und/oder Wendeplattenwerkzeug vorhanden ist.

Bevorzugt ist die Dummyeinheit an der beweglichen Werkzeugaufspannplatte befestigt, so dass die bewegliche Werkzeugaufspannplatte, die Dummyeinheit, der Drehteller/der Drehtisch und ein Werkzeugteil des Formwerkzeuges eine Einheit bilden, die relativ zu einem Maschinenbett in Öffnungs-/Schließrichtung beweglich ist.

Dies hat insbesondere Vorteile dahingehend, dass die Montagezeiten für die Umrüstung einer derartigen Spritzgießmaschine und die weiteren Anpassungsarbeiten vermindert bzw. optimiert sind. Demgemäß kann das andere Formwerkzeugteil in üblicher Art und Weise an der festen Werkzeugaufspannplatte befestigt werden, an der Spritzaggregate angeordnet sind, die die Formkavitäten mit einer spritzbaren Kunststoffmasse versorgen.

In einer einfachst möglichen Form, ist das zweite Formwerkzeugteil mittels der Dreheinheit/dem Drehteller um eine horizontale Achse relativ zum ersten Formwerkzeugteil verdrehbar.

Je nach dem, welche Werkzeugkonstruktion zum Einsatz kommt, kann die Verdrehbarkeit in unterschiedlichen Winkelschritten erfolgen. Dies hängt im Wesentlichen davon ab, für welche Art von Bauteil das Formwerkzeug ausgelegt ist. So empfiehlt es sich beispielsweise bei einem Zweikomponentenspritzgussteil einen Verdrehschritt von jeweils 180° vorzusehen, bei einem Dreikomponenten- oder Mehrkomponentenwerkzeug können derartige Winkelschritte auch 120° bzw. 90° betragen. Selbstverständlich kann es auch andere Gründe geben, die eine auch von oben explizit genannte Winkelschrittgröße erfordert.

Zweckmäßigerweise ersetzt die Dummyeinheit die Wendeplatte einer Wendeplattenspritzgießmaschine oder ein entsprechendes zweites Formwerkzeug des Wendeplatten- und/oder Etagenwerkzeuges. Hierzu ist die Schließeinheit zur Verwendung in einer derartigen Spritzgießmaschine ausgebildet. Sofern es zweckmäßig und notwendig ist, kann die Schließeinheit zusätzlich über Holmverlängerungen verfügen, so dass zur Schaffung eines ggf. erforderlichen Einbauraums für die Dummyeinheit zusammen mit der Dreheinheit/dem Drehteller der maximale Abstand zwischen der beweglichen Werkzeugaufspannplatte und der festen Werkzeugaufspannplatte ausreichend vergrößerbar ist.

Im Folgenden wird die Erfindung anhand der Zeichnung beispielhaft näher erläutert. Es zeigen:
- Figur 1:: eine erfindungsgemäße Schließeinheit einer Spritzgießmaschine in schematischer Seitenansicht;
- Figur 2:: eine Standard-Zweiplatten-Spritzgussmaschine in schematischer Ansicht (gehört nicht zur Erfindung);

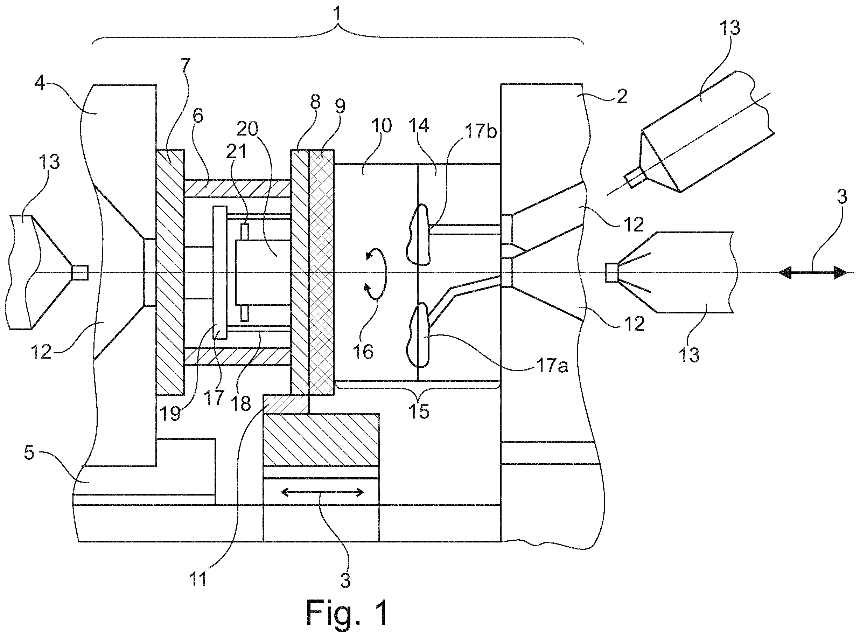

Eine erfindungsgemäße Schließeinheit 1 weist eine feste Werkzeugaufspannplatte 2 und eine in einer Öffnungs-/Schließrichtung 3 verschiebbar antreibbar gelagerte bewegliche Werkzeugaufspannplatte 4 auf. Die bewegliche Werkzeugaufspannplatte 4 ist in Öffnungs-/Schließrichtung 3 auf einem Maschinenbett 5 verschieblich gelagert. In der Öffnungs-/Schließrichtung 3 gesehen ist zwischen der festen Werkzeugaufspannplatte 2 und der beweglichen Werkzeugaufspannplatte 4 eine Dummy-Einheit 6 angeordnet, welche im Ausführungsbeispiel gemäß Fig. 1 mit einer ersten Grundplatte 7 an der beweglichen Werkzeugaufspannplatte 4 befestigt ist. Der ersten Grundplatte 7 gegenüberliegend besitzt die Dummyeinheit 6 eine zweite Grundplatte 8. An der zweiten Grundplatte 8 ist eine Dreheinheit/Drehteller 9 befestigt. An dieser Dreheinheit/diesem Drehteller 9 ist ein erstes Formwerkzeugteil 10 befestigt. Dieses erste Formwerkzeugteil 10 ist zusammen mit der Dreheinheit/dem Drehteller 9, der Dummyeinheit 6 und der beweglichen Werkzeugaufspannplatte 4 in der Öffnungs-/Schließrichtung 3 hin- und herbewegbar antreibbar. Im Ausführungsbeispiel gemäß Fig. 1 ist die Dummyeinheit 6 mit ihrer zweiten Grundplatte 8 auf einem Schiebetisch 11 unterstützt gelagert. Der Schiebetisch 11 ist ebenfalls zusammen mit der beweglichen Werkzeugaufspannplatte 4 in der Öffnungs-/Schließrichtung 3 bewegbar.

Die feste Werkzeugaufspannplatte 2 besitzt zumindest eine, im Ausführungsbeispiel gemäß Fig. 1 zwei Aufnahmen 12 für Spritzaggregate 13. Die bewegliche Werkzeugaufspannplatte 4 besitzt ebenfalls eine Aufnahme 12 zur Aufnahme eines Spritzaggregates 13.

An der festen Werkzeugaufspannplatte 2 ist ein zweites Formwerkzeugteil 14 befestigt, welches zusammen mit dem ersten Formwerkzeugteil 10 das Formwerkzeug 15 bildet.

Die Dreheinheit/der Drehteller 9 ermöglicht es, bei geöffnetem Formwerkzeug 15 das erste Formwerkzeugteil 10 rotatorisch in der Doppelpfeilrichtung 16 relativ zum zweiten Formwerkzeugteil 14 zu verdrehen. So ist es z. B. in einfacher Art und Weise möglich, wenn z. B. innerhalb des Formwerkzeugs 15 zweierlei Formkavitäten 17a und 17b vorhanden sind, eine Zwei- oder Mehrkomponentenspritzgusstechnik anzuwenden. Die dargestellte Ausführungsform gemäß Fig. 1 stellt einen Umbau einer Spritzgießmaschine für ein Etagenwerkzeug dar. Ein Formwerkzeug (nicht gezeigt), welches mit einer seiner Formwerkzeughälften an der beweglichen Werkzeugaufspannplatte befestigt ist und mit dem dortigen Spritzaggregat 13 zusammenwirken kann, ist im vorliegenden Fall durch die Dummyeinheit 6 ersetzt.

Die Dummyeinheit 6 besitzt eine Auswerfereinrichtung 17 mit Auswerferstäben 18 und einer Auswerfergrundplatte 19. Die Auswerferstäbe 18 und die Dreheinheit/der Drehteller 9 sind derart ausgebildet, dass Formteile, welches im Formwerkzeug 15 produziert wurde, mittels der Auswerferstäbe 18 aus dem Formwerkzeugteil 10 (erstes Formwerkzeugteil) ausgeworfen werden können.

Zweckmäßigerweise weist die Dummyeinheit 6 zusätzlich zur Auswerfereinrichtung 17 eine Verteilereinheit 20 auf. Die Verteilereinheit 20 besitzt Anschlüsse 21 für Fluidzuleitungen/Fluidableitungen (nicht gezeigt). Die Verteilereinheit 20 ist in der Lage über die Dreheinheit/den Drehteller 9 hinweg das Formwerkzeug 15 über geeignete kommunizierende Kanäle durch das erste Formwerkzeugteil 10 hindurch mit benötigten Fluiden, beispielsweise einer Kühlflüssigkeit oder Hydraulikfluiden oder dergleichen zu versorgen.

Eine Schließeinheit 1 in einer Ausführungsform gemäß Fig. 1 hat den Vorteil, dass durch den Einsatz der Dummyeinheit 6, welche eine Auswerfereinheit 17 und eine Verteilereinheit 20 aufweist, in einfacher Art und Weise eine Spritzgießmaschine, die für ein Etagenwerkzeug vorgesehen ist, in eine Spritzgießmaschine umzubauen, die für Zwei- oder Mehrkomponentenfertigung in einem einzigen Formwerkzeug 15 mit einer Formtrennebene geeignet ist. Somit ist die Flexibilität einer solchen für ein Etagenwerkzeug ausgelegten Spritzgießmaschine erhöht, da eine zusätzliche Fertigungsart (Mehrkomponentenspritzguss) in einfacher Art und Weise realisierbar ist.

In gleicher Art und Weise ist eine Spritzgießmaschine, die für ein Wendeplattenwerkzeug ausgebildet ist, mittels der Dummyeinheit 6, der Dreheinheit/dem Drehteller 9 umrüstbar, so dass eine Zweikomponentenspritzgusstechnik mit Formwerkzeugteilen, die um eine horizontale Achse in der Drehrichtung 16 zueinander verdrehbar sind, möglich ist. Im Fall einer Spritzgießmaschine, die für ein Wendeplattenwerkzeug ausgelegt ist, ist es zweckmäßig, den Schiebetisch 11 als Drehtisch auszubilden, damit die die Wendeplatte ersetzende Dummyeinheit 6 um eine Hochachse senkrecht zur Öffnungs-/Schließrichtung 3 verdrehbar ist.

Der Schiebetisch 11 ist im gezeigten Fall gemäß Fig. 1 unter Einsatz der Dummyeinheit 6 und der Dreheinheit/dem Drehteller 9 außer Funktion und funktioniert lediglich als Schiebetisch.

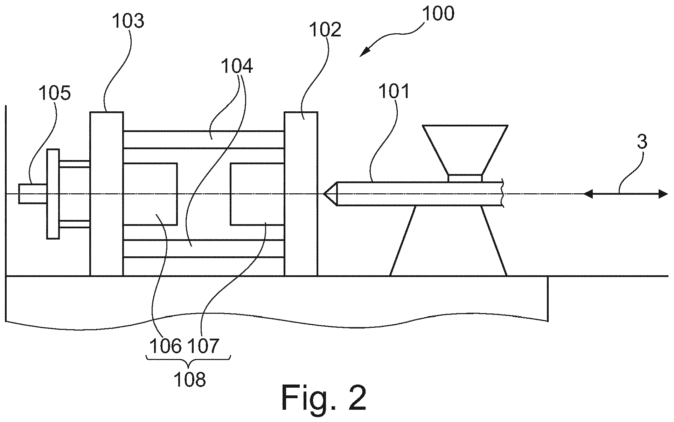

In Fig. 2 ist schematisch eine Spritzgießmaschine 100 in Standardbauweise mit einem Einspritzaggregat 101, einer festen Werkzeugaufspannplatte 102 und einer beweglichen Werkzeugsaufspannplatte 103, welche an Holmen 104 geführt ist, dargestellt.

Außerhalb des Raumes, der Öffnungs-/Schließrichtung 3 zwischen den Werkzeugaufspannplatten 102, 103 begrenzt wird, sitzt in Öffnungs-/Schließrichtung vom Einspritzaggregat 101 abgewandt eine Auswerfereinheit 105. Die Werkzeugaufspannplatten 102, 103 sind zur Aufnahme eines ersten Formwerkzeugteils 106 und eines zweiten Formwerkzeugsteils 107 ausgebildet, welche ein Formwerkzeug 108 bilden.

### Bezugszeichenliste

- 1: erfindungsgemäße Schließeinheit
- 2: feste Werkzeugaufspannplatte
- 3: Öffnungs-/Schließrichtung
- 4: bewegliche Werkzeugaufspannplatte
- 5: Maschinenbett
- 6: Dummyeinheit
- 7: erste Grundplatte
- 8: zweite Grundplatte
- 9: Dreheinheit/Drehteller
- 10: erstes Formwerkzeugteil
- 11: Schiebetisch
- 12: Aufnahme
- 13: Spritzaggregate
- 14: zweites Formwerkzeugteil
- 15: Formwerkzeug
- 16: Doppelpfeilrichtung
- 17: Auswerfereinrichtung
- 17a: Formkavität
- 17b: Formkavität
- 18: Auswerferstäbe
- 19: Auswerfergrundplatte
- 20: Verteilereinheit
- 21: Anschlüsse

- 100: Spritzgießmaschine
- 101: Einspritzaggregat/Spritzaggregat
- 102: feste Werkzeugaufspannplatte
- 103: bewegliche Werkzeugsaufspannplatte
- 104: Holme
- 105: Auswerfereinheit
- 106: erstes Formwerkzeugteil
- 107: zweites Formwerkzeugteil
- 108: Formwerkzeug

## Patentansprüche

1. Schließeinheit für eine Spritzgießmaschine umfassend zumindest zwei Werkzeugaufspannplatten (2, 4), von denen zumindest eine Werkzeugaufspannplatte (4) beweglich ist, und zumindest ein Formwerkzeug (15), bei dem aus einem ersten Formwerkzeugteil (10) und aus einem zweiten Formwerkzeugteil (14) die Bildung einer öffnungsfähigen und verschließbaren Formkavität ermöglicht ist, wobei die Schließeinheit (1) eine Dummyeinheit (6) besitzt, welche in einer Schließrichtung (3) der Schließeinheit (1) betrachtet zwischen den Werkzeugaufspannplatten (2, 4) angeordnet ist, **dadurch gekennzeichnet, dass** das erste Formwerkzeugteil (10) mittels einer Dreheinheit/eines Drehtellers (9) relativ zur Dummyeinheit (6) und/oder zum zweiten Formwerkzeugteil (14) derart verdrehbar an der Dummyeinheit (6) befestigt ist, dass die Drehachse parallel zu einer Öffnungs- und Schließrichtung des Formwerkzeugs (15) angeordnet ist.

2. Schließeinheit nach Anspruch 1, **dadurch gekennzeichnet, dass** die Dummyeinheit (6) eine Auswerfereinrichtung (17) für das Formwerkzeug (15) aufweist.

3. Schließeinheit nach Anspruch 1 oder 2, **dadurch gekennzeichnet, dass** die Dummyeinheit (6) Verteilereinrichtungen (20) besitzt, mittels denen zumindest ein Fluid, z. B. ein Kühl- oder Hydraulikfluid für das Formwerkzeug (15), dem Formwerkzeug (15) zuleitbar ist.

4. Schließeinheit nach einem der vorangegangenen Ansprüche, **dadurch gekennzeichnet, dass** die Dummyeinheit (6) im Bereich der Dreheinheit/dem Drehteller (9) auf einem Schiebetisch- und/oder Drehtisch (11) lagert.

5. Schließeinheit nach einem der vorangegangenen Ansprüche, **dadurch gekennzeichnet, dass** die Dummyeinheit (6) an der beweglichen Werkzeugaufspannplatte (4) befestigt ist.

6. Schließeinheit nach einem der vorangegangenen Ansprüche, **dadurch gekennzeichnet, dass** das zweite Formwerkzeugteil (14) des Formwerkzeugs (15) an der festen Werkzeugsaufspannplatte (2) befestigt ist.

7. Schließeinheit nach einem der vorangegangenen Ansprüche, **dadurch gekennzeichnet, dass** das erste Formwerkzeugteil (10) mittels der Dreheinheit/dem Drehteller (9) um eine horizontale Achse in einer Doppelpfeilrichtung (16) relativ zum zweiten Formwerkzeugteil (14) verdrehbar ist.

8. Schließeinheit nach einem der vorangegangenen Ansprüche, **dadurch gekennzeichnet, dass** die Schließeinheit (3) zur Verwendung in einer Spritzgießmaschine ausgebildet ist, die für eine Wendeplatten- und/oder Etagenwerkzeuganordnung geeignet ist und/oder die Dummyeinheit (6) die Wendeplatte oder ein zweites Formwerkzeug (15) des Wendeplatten- und/oder Etagenwerkzeugs ersetzt.

9. Schließeinheit nach einem der vorangegangenen Ansprüche, **dadurch gekennzeichnet, dass** die Schließeinheit (1) zur Verwendung in einer Spritzgießmaschine ausgebildet ist, wobei die Schließeinheit (1) hierfür zusätzlich Holmverlängerungen (109) besitzt, so dass zur Schaffung des erforderlichen Einbauraums für die Dummyeinheit (6) und die Dreheinheit/den Drehteller (9) der maximale Abstand der beweglichen Werkzeugaufspannplatte (4) zu der festen Werkzeugaufspannplatte (2) vergrößerbar ist.

10. Schließeinheit nach einem der vorangegangenen Ansprüche, **dadurch gekennzeichnet, dass** das Formwerkzeug (15) ein Zweikomponentenspritzgießwerkzeug ist.

## Claims

1. A closing unit for an injection moulding machine comprising at least two tool platens (2, 4), at least one tool platen (4) of which is movable, and at least one moulding tool (15), in which the formation of a mould cavity which is able to be opened and closed is made possible from a first moulding tool part (10) and from a second moulding tool part (14), wherein the closing unit (1) has a dummy unit (6) which, viewed in a closing direction (3) of the closing unit (1), is arranged between the tool platens (2, 4), **characterized in that** the first moulding tool part (10) is rotatably fixed to the dummy unit (6) by means of a rotary unit/rotary plate (9) relative to the dummy unit (6) and or to the second moulding tool part (14) such that the rotation axis is arranged parallel to an opening- and closing direction of the moulding tool (15).

2. The closing unit according to Claim 1, **characterized in that** the dummy unit (6) has an ejector device (17) for the moulding tool (15).

3. The closing unit according to Claim 1 or 2, **characterized in that** the dummy unit (6) has distributor devices (20), by means of which at least one fluid, e.g. a cooling- or hydraulic fluid for the moulding tool (15), is able to be fed to the moulding tool (15).

4. The closing unit according to one of the preceding claims, **characterized in that** the dummy unit (6) is mounted on a sliding table and/or rotary table (11) in the region of the rotary unit/rotary plate (9).

5. The closing unit according to one of the preceding claims, **characterized in that** the dummy unit (6) is fixed to the movable tool platen (4).

6. The closing unit according to one of the preceding claims, **characterized in that** the second moulding tool part (14) of the moulding tool (15) is fixed to the stationary tool platen (2).

7. The closing unit according to one of the preceding claims, **characterized in that** the first moulding tool part (10) is rotatable relative to the second moulding tool part (14) by means of the rotary unit/rotary plate (9) about a horizontal axis in a double arrow direction (16).

8. The closing unit according to one of the preceding claims, **characterized in that** the closing unit (3) is configured for use in an injection moulding machine, which is suitable for a reversing plate- and/or stack mould arrangement and/or the dummy unit (6) replaces the reversing plate or a second moulding tool (15) of the reversing plate- and/or stack mould.

9. The closing unit according to one of the preceding claims, **characterized in that** the closing unit (1) is configured for use in an injection moulding machine, wherein the closing unit (1) has, for this, additionally tie-bar extensions (109), so that for the provision of the necessary installation space for the dummy unit (6) and the rotary unit/rotary plate (9), the maximum distance of the movable tool platen (4) to the stationary tool platen (2) is able to be increased.

10. The clamping unit according to one of the preceding claims, **characterized in that** the moulding tool (15) is a two-component injection moulding tool.

## Revendications

1. Unité de fermeture pour une machine de moulage par injection comprenant au moins deux plateaux de serrage d'outil (2, 4) desquels au moins un plateau de serrage d'outil (4) est mobile, et au moins un outil de moule (15), avec lequel la formation d'une cavité de moule pouvant s'ouvrir et se fermer est possible à partir d'une première partie d'outil de moule (10) et d'une seconde partie d'outil de moule (14), dans lequel l'unité de fermeture (1) comprend une unité factice (6), laquelle est disposée dans un sens de fermeture (3) de l'unité de fermeture (1), vu entre les plateaux de serrage d'outil (2, 4), **caractérisée en ce que** la première partie d'outil de moule (10) est fixée à l'unité factice (6) au moyen d'une unité rotative/d'un plateau tournant (9) par rapport à l'unité factice (6) et/ou à la seconde partie d'outil de moule (14) en étant rotative de telle façon que l'axe de rotation est disposé parallèle à un sens d'ouverture et de fermeture de l'outil de moule (15).

2. Unité de fermeture selon la revendication 1, **caractérisée en ce que** l'unité factice (6) présente un dispositif d'éjection (17) pour l'outil de moule (15).

3. Unité de fermeture selon la revendication 1 ou 2, **caractérisée en ce que** l'unité factice (6) possède des dispositifs de répartition (20) au moyen desquels au moins un fluide, par ex. un fluide de refroidissement ou hydraulique pour l'outil de moule (15) peut être transporté vers l'outil de moule (15).

4. Unité de fermeture selon l'une des revendications précédentes, **caractérisée en ce que** l'unité factice (6) est disposée sur une table coulissante et/ou rotative (11) au niveau de l'unité rotative/du plateau tournant (9).

5. Unité de fermeture selon l'une des revendications précédentes, **caractérisée en ce que** l'unité factice (6) est fixée sur le plateau de serrage d'outil mobile (4) .

6. Unité de fermeture selon l'une des revendications précédentes, **caractérisée en ce que** la seconde partie (14) de l'outil de moule (15) est fixée sur le plateau de serrage fixe (2).

7. Unité de fermeture selon l'une des revendications précédentes, **caractérisée en ce que** la première partie d'outil de moule (10) est rotative par rapport à la seconde partie d'outil de moule (14) sur un axe horizontal dans un sens de double flèche (16), au moyen de l'unité rotative/du plateau tournant (9).

8. Unité de fermeture selon l'une des revendications précédentes, **caractérisée en ce que** l'unité de fermeture (3) est conçue pour l'emploi dans une machine de moulage par injection qui est appropriée pour un agencement à plateau de retournement et/ou à outil étagé, et/ou l'unité factice (6) remplace le plateau de retournement ou un second outil de moule (15) du plateau de retournement et/ou de l'outil étagé.

9. Unité de fermeture selon l'une des revendications précédentes, **caractérisée en ce que** l'unité de fermeture (1) est conçue pour l'emploi dans une machine de moulage par injection, dans lequel l'unité de fermeture (1) possède pour cela des prolongements de barre (109) supplémentaires de sorte que pour créer l'espace d'intégration nécessaire pour l'unité factice (6) et l'unité rotative/le plateau tournant (9), l'écart maximal du plateau de serrage d'outil mobile (4) par rapport au plateau de serrage d'outil fixe (2) peut être agrandi.

10. Unité de fermeture selon l'une des revendications précédentes, **caractérisée en ce que** l'outil de moule (15) est un outil de moulage par injection bi-composants.
